Europäisches Patentamt

European Patent Office

Office européen des brevets

(19)

(11) **EP 0 894 246 B1**

(12) **FASCICULE DE BREVET EUROPEEN**

(45) Date de publication et mention
de la délivrance du brevet:
**24.07.2002 Bulletin 2002/30**

(51) Int Cl.⁷: **G01F 25/00**

(21) Numéro de dépôt: **97920777.6**

(86) Numéro de dépôt international:
**PCT/FR97/00694**

(22) Date de dépôt: **17.04.1997**

(87) Numéro de publication internationale:
**WO 97/40351 (30.10.1997 Gazette 1997/46)**

(54) **PROCEDE DE DETECTION D'UN DYSFONCTIONNEMENT D'UN COMPTEUR D'EAU ET D'EVALUATION DE SA DUREE, AINSI QUE SON DISPOSITIF DE MISE EN OEUVRE**

**VERFAHREN UND VORRICHTUNG ZUR DETEKTION EINER WASSERZÄHLER-FUNKTIONSSTÖRUNG SOWIE ZUR AUSWERTUNG DER DAUER DIESER STÖRUNG**

**METHOD FOR DETECTING WATER METER MALFUNCTION, CALCULATING THE DURATION THEREOF, AND DEVICE FOR IMPLEMENTING SAME**

(84) Etats contractants désignés:
**AT BE CH DE ES FI FR GB IE IT LI LU NL PT SE**

(30) Priorité: **19.04.1996 FR 9604929**

(43) Date de publication de la demande:
**03.02.1999 Bulletin 1999/05**

(73) Titulaire: **Societe Anonyme de Production de Procédés de Comptage de l'Eau et Autres Liquides, SAPPEL**
**68300 Saint Louis (FR)**

(72) Inventeur: **BACH, Guy**
**F-68520 Schweighouse (FR)**

(74) Mandataire: **Laget, Jean-Loup et al**
**Cabinet Brema,**
**78, avenue Raymond Poincaré**
**75116 Paris (FR)**

(56) Documents cités:
**EP-A- 0 132 167        EP-A- 0 288 448**
**DE-A- 3 811 946        FR-A- 2 458 795**

• **VLSI AND COMPUTER PERIPHERALS, HAMBURG, MAY 8 - 12, 1989, no. 1989, 8 Mai 1989, PROEBSTER W E;REINER H, pages 3-148-151, XP000044169 HASSAPIS G: "A DSP-BASED ACTIVE SENSOR INTERFACE PERFORMING ON-LINE FAULT DETECTION AND IDENTIFICATION"**

**Description**

L'invention concerne un procédé de détection et d'évaluation de la durée d'un dysfonctionnement d'un compteur, en particulier lorsque ledit compteur fonctionne sous forme d'un compteur dit sous-marin.

On a pu remarquer qu'au cours de l'utilisation d'un compteur d'eau, la précision de ce dernier pouvait se dégrader du fait de l'usure même du compteur ou de dépôt de particules solides telles que du sable, en particulier lors de la réalisation de travaux dans la tuyauterie.

La plupart du temps, cette dégradation se traduit par une incapacité du compteur d'eau à comptabiliser les faibles débits et entraîne également des mesures erronées des débits plus importants. Cette dégradation étant difficilement décelable, il s'ensuit une mesure erronée de la consommation en eau. En outre, la simple détection du dysfonctionnement d'un compteur ne permet pas d'évaluer la durée dudit dysfonctionnement et, par conséquent, d'estimer ladite mesure erronée de la consommation.

Par ailleurs, lorsque le dysfonctionnement du compteur d'eau est dû à un dépôt de particules solides, par exemple suite à des travaux, ledit dépôt peut être naturellement éliminé. En effet, le flux d'eau s'écoulant au travers du compteur va entraîner peu à peu les particules solides, ramenant le compteur à son état normal. De ce fait, ce type de dysfonctionnement peut passer tout à fait inaperçu, le compteur ayant perdu et retrouvé ses caractéristiques de fonctionnement normales sans que cela ait pu être décelé.

Ce type de compteur défaillant est appelé compteur sous-marin dans la mesure où son dysfonctionnement est pratiquement indécelable et les indications fournies sont inférieures à celles de la normale.

Il convient donc de pallier à ces inconvénients en proposant un procédé de détection du dysfonctionnement d'un compteur d'eau permettant également d'évaluer la durée pendant laquelle ledit compteur a fonctionné en tant que compteur sous-marin.

A cet effet, l'invention propose un procédé de détection du dysfonctionnement d'un compteur d'eau et d'évaluation de la durée dudit dysfonctionnement, caractérisé en ce qu'il comprend : la mesure du débit moyen à chaque unité de volume détectée depuis l'unité de volume précédente, l'analyse comparative de ce débit moyen à deux débits limites qui sont un premier débit correspondant au débit minimal de fonctionnement normal du compteur et un second débit correspondant au débit minimal de fonctionnement du compteur en tant que compteur sous-marin, le calcul, lorsqu'un débit moyen est détecté supérieur au premier débit, du rapport entre la somme des unités de volumes comptabilisées entre le premier et le second débits et cette dite somme à laquelle est additionnée la somme des unités de volume comptabilisées à des débits supérieurs au second débit, le déclenchement d'une horloge lorsque ce rapport est inférieur à un seuil de sous-marinité et l'arrêt de ladite horloge lorsque le rapport est à nouveau supérieur au seuil de sous-marinité.

Lorsque le débit moyen calculé est détecté inférieur au débit minimal de fonctionnement normal du compteur, ledit débit moyen n'est pas pris en compte car il ne reflète aucun événement significatif.

Lorsque le débit moyen calculé est détecté supérieur au débit minimal de fonctionnement normal du compteur on pratique alors une analyse de détection dudit fonctionnement d'un compteur en tant que compteur sous-marin.

Ainsi, on additionne séparément les unités de volume comptabilisées entre le débit minimal de fonctionnement normal du compteur et le débit minimal de fonctionnement du compteur en tant que compteur sous-marin et les unités de volume comptabilisées à des débits supérieurs au débit minimal de fonctionnement du compteur en tant que compteur sous-marin.

On peut ainsi calculer la valeur du rapport entre les volumes comptabilisés entre les deux débits et la somme des volumes comptabilisés entre les deux débits et les volumes comptabilisés au-dessus du débit minimal de fonctionnement du compteur en tant que compteur sous-marin.

La valeur obtenue est ensuite comparée à une valeur de ce rapport en dessous de laquelle le compteur fonctionne en tant que compteur sous-marin.

Dès qu'une valeur de ce rapport est détectée telle que le compteur fonctionne en compteur sous-marin, on déclenche une horloge et dès que la valeur du rapport est détectée telle que le compteur fonctionne normalement, l'horloge est arrêtée.

On détecte ainsi, non seulement, le dysfonctionnement du compteur fonctionnant en tant que compteur sous-marin mais, en outre, on détermine de manière précise la durée pendant laquelle ce dysfonctionnement a existé.

Afin de conserver une bonne sensibilité de l'analyse effectuée, on ne traite que les unités de volume les plus récentes par un procédé dit de "fenêtre glissante".

L'invention concerne également un dispositif de détection d'un dysfonctionnement d'un compteur d'eau en tant que compteur sous-marin et d'évaluation de la durée dudit dysfonctionnement selon le procédé de l'invention caractérisé en ce qu'il comprend des moyens de mesure des débits dans le compteur d'eau, des moyens de mesure d'un premier volume d'eau à un débit compris entre un débit minimal de fonctionnement normal du compteur et un débit minimal de fonctionnement du compteur en tant que compteur sous-marin et un second volume d'eau à un débit supérieur audit second débit et des moyens de mise en marche et d'arrêt d'une horloge.

De préférence, les moyens de mesure des débits dans le compteur d'eau sont constitués par des moyens de mesure des unités de volume traversant le compteur d'eau constitués par un émetteur d'impulsions électriques placé sur le compteur et délivrant une impulsion à chaque unité de volume écoulé.

Les moyens de calcul et d'analyse sont constitués par un calculateur électronique.

Ledit calculateur électronique peut comporter un écran sur lequel s'affichent les résultats des mesures effectuées. Le calculateur peut également être relié à un fichier de données permettant une exploitation informatique des résultats.

On décrira maintenant l'invention plus en détail à l'aide d'un exemple de réalisation dans lequel on utilise un émetteur d'impulsions électriques pour informer le calculateur électronique.

Un débit est défini par le temps séparant deux impulsions consécutives. Ainsi, le débit de fonctionnement minimal normal du compteur D1 et le débit de fonctionnement minimal du compteur en tant que compteur sous-marin D2 sont définis par deux variables T1 et T2 définissant un nombre de période de 4s.

Le calculateur électronique en fonction des données reçues de l'émetteur d'impulsions électriques détermine les valeurs du premier volume écoulé V1 à un débit compris entre D1 et D2 et du second volume V2 à un débit supérieur à D2.

Le seuil de la sous-marinité est obtenu par la valeur du rapport suivant :

$$V1/(V1 + V2) = k/256$$

En ce qui concerne le traitement de la "fenêtre glissante" on retranchera alors une quantité k au volume V1 et une quantité 256-k au volume V2, lorsque (V1 + v2) > VL

Ainsi, un compteur sera dit sous-marin si :

$$256*V1-k*(V1+V2) < 0$$

Dans ces formules de calcul, k est une grandeur permettant de définir un pourcentage et VL correspond au volume limite en litre.

Toutes ces valeurs sont reparamétrables. La modification de ces paramètres entraîne obligatoirement une réinitialisation de V1 et de V2 à zéro, cependant VL doit pouvoir être modifié sans remise à zéro de V1 et de V2.

A chaque nouvelle impulsion électrique provenant de l'émetteur d'impulsions électriques, il est donc nécessaire de réactualiser V1 et V2 pour vérifier que le compteur ne fonctionne pas en sous-marin. Dans le cas où le compteur est détecté compteur sous-marin, on déclenche l'horloge afin de comptabiliser la durée pendant laquelle le compteur apparaît comme sous-marin. Dès que le compteur n'est plus détecté en tant que compteur sous-marin, l'horloge est arrêtée et on a ainsi pu déterminer dans le temps la durée du dysfonctionnement du compteur fonctionnant en tant que compteur sous-marin.

## Revendications

1. Procédé de détection du dysfonctionnement d'un compteur d'eau et d'évaluation de la durée dudit dysfonctionnement,
   **caractérisé en ce qu'**il comprend :

   la mesure du débit moyen à chaque unité de volume détectée depuis l'unité de volume précédente,
   l'analyse comparative de ce débit moyen à deux débits limites qui sont un premier débit correspondant au débit minimal de fonctionnement normal du compteur et un second débit correspondant au débit minimal de fonctionnement du compteur en tant que compteur sous-marin,
   le calcul, lorsqu'un débit moyen est détecté supérieur au premier débit, du rapport entre la somme des unités de volumes (V1) comptabilisées entre le premier et le second débits et cette dite somme à laquelle est additionnée la somme des unités de volume (V2) comptabilisées à des débits supérieurs au second débit, le déclenchement d'une horloge lorsque ce rapport est inférieur à un seuil de sous-marinité et l'arrêt de ladite horloge lorsque le rapport est à nouveau supérieur au seuil de sous-marinité.

2. Procédé selon la revendication 1,
   **caractérisé en ce que** la mesure du débit moyen détectant une valeur du débit inférieur au premier débit reflète l'absence d'événement.

3. Dispositif de détection d'un dysfonctionnement d'un compteur d'eau en tant que compteur sous-marin et d'évaluation de la durée dudit dysfonctionnement selon le procédé des revendications 1 à 2,
   **caractérisé en ce qu'**il comprend des moyens de mesure des unités de volumes traversant le compteur d'eau, des moyens de calcul d'un débit moyen, des moyens de comparaison du débit moyen mesuré par lesdits moyens de mesure à un débit minimal de fonctionnement normal du compteur et à un débit minimal de fonctionnement du compteur en tant que compteur sous-marin, des moyens de calcul, lorsqu'un débit moyen est détecté supérieur au débit minimal de fonctionnement normal du compteur, du rapport entre la somme des unités de volume (V1) comptabilisées entre le premier et le second débits et cette dite somme à laquelle est additionnée la somme des unités de volume (V2) comptabilisées à des débits supérieurs au second débit, des moyens de comparaison dudit rapport à un seuil de sous-marinité et des moyens de mise en marche et d'arrêt d'une horloge en fonction de la comparaison effectuée.

4. Dispositif selon la revendication 3, **caractérisé en ce que** les moyens de mesure des unités de volume traversant le compteur d'eau sont constitués par un émetteur d'impulsions électriques placé sur le compteur.

5. Dispositif selon l'une des revendications 3 et 4, **caractérisé en ce que** les moyens de calcul et d'analyse sont constitués par un calculateur électronique.

6. Dispositif selon la revendication 5, **caractérisé en ce que** ledit calculateur électronique comporte un écran sur lequel s'affichent les résultats des mesures effectuées.

7. Dispositif selon la revendication 5, **caractérisé en ce que** le calculateur est relié à un fichier de données permettant une exploitation informatique des résultats.

**Claims**

1. A method for detecting the malfunction of a water meter and calculating the duration of the said malfunction, **characterised in that** it comprises:

   determination of the average flow rate at each unit volume detected since the preceding unit volume,
   comparative analysis of this average flow rate at two limiting flow rates which are a first flow rate corresponding to the normal minimum operational flow rate of the meter and a second flow rate corresponding to the minimum operational flow rate of the meter when considered to be a submerged meter,
   calculation, when an average flow rate higher than the first flow rate is detected, of the ratio between the sum of the unit volumes (V1) recorded between the first and the second flow rates and this said sum to which the sum of the unit volumes (V2) recorded at flow rates higher than the second flow rate has been added,
   starting of a clock when this ratio is below a submerged status threshold and stopping the said clock when the ratio is again higher than the submerged status threshold.

2. A method according to Claim 1, **characterised in that** the determination of the average flow rate detecting a value for the flow rate that is below the first flow rate indicates the absence of an event.

3. A device for detecting a malfunction of a water meter when considered to be a submerged meter and calculation of the duration of the said malfunction in accordance with the method of Claims 1 to 2, **characterised in that** it comprises means for determination of the unit volumes passing through the water meter, means for calculation of an average flow rate, means for comparison of the average flow rate determined by the said determination means at a normal minimum operational flow rate of the meter and at a minimum operational flow rate of the meter when considered to be a submerged meter, means for calculation, when an average flow rate is detected that is higher than the normal minimum operational flow rate of the meter, of the ratio between the sum of the unit volumes (V1) recorded between the first and the second flow rates and this said sum to which the sum of the unit volumes (V2) recorded at flow rates higher than the second flow rate has been added, means for comparison of the said ratio with a submerged status threshold and means for starting and stopping a clock as a function of the comparison carried out.

4. A device according to Claim 3, **characterised in that** the means for determination of the unit volumes passing through the water meter comprise an electric pulse emitter fitted on the meter.

5. A device according to one of Claims 3 and 4, **characterised in that** the means for calculation and analysis comprise an electronic calculator.

6. A device according to Claim 5, **characterised in that** the said electronic calculator has a screen on which the results of the determinations carried out are displayed.

7. A device according to Claim 5, **characterised in that** the calculator is linked to a data file enabling computerised handling of the results.

**Patentansprüche**

1. Verfahren zur Erfassung der Funktionsstörung eines Wasserzählers und zur Bewertung der Dauer der besagten Funktionsstörung, **dadurch gekennzeichnet, daß** es folgendes umfaßt:

   die Messung der mittleren Durchflußmenge bei jeder erfaßten Volumeneinheit seit der vorangehenden Volumeneinheit,

die vergleichende Analyse dieser mittleren Durchflußmenge mit zwei Grenzdurchflußmengen, bei denen es sich um eine erste Durchflußmenge entsprechend der Mindestdurchflußmenge bei Normalbetrieb des Zählers und um eine zweite Durchflußmenge entsprechend der Mindestdurchflußmenge bei Betrieb des Zählers als verdeckter Zähler handelt, wenn eine mittlere Durchflußmenge größer als die erste Durchflußmenge erfaßt wird, die Berechnung des Verhältnisses zwischen der Summe der zwischen der ersten und der zweiten Durchflußmenge berechneten Volumeneinheiten (V1) und dieser besagten Summe, zu der die Summe der bei Durchflußmengen größer als die zweite Durchflußmenge berechneten Volumeneinheiten (V2) hinzuaddiert wird, das Starten einer Zeituhr, wenn dieses Verhältnis kleiner als ein Verdecktbetriebs-Schwellenwert ist, und die Abschaltung der besagten Zeituhr, wenn das Verhältnis wieder größer als der Verdecktbetriebs-Schwellenwert ist.

2. Verfahren nach Anspruch 1,
**dadurch gekennzeichnet, daß** die Messung der mittleren Durchflußmenge, die einen Wert der Durchflußmenge kleiner als die erste Durchflußmenge erfaßt, das Nichtvorliegen eines Vorfalls anzeigt.

3. Vorrichtung zur Erfassung einer Funktionsstörung eines Wasserzählers als verdeckter Zähler und zur Bewertung der Dauer der besagten Funktionsstörung nach dem Verfahren der Ansprüche 1 bis 2,
**dadurch gekennzeichnet, daß** sie die folgenden Mittel umfaßt: Mittel zur Messung der durch den Wasserzähler fließenden Volumeneinheiten, Mittel zur Berechnung einer mittleren Durchflußmenge, Mittel zum Vergleich der durch die besagten Meßmittel gemessenen mittleren Durchflußmenge mit einer Mindestdurchflußmenge bei Normalbetrieb des Zählers und mit einer Mindestdurchflußmenge bei Betrieb des Zählers als verdeckter Zähler, Berechnungsmittel, um, wenn eine mittlere Durchflußmenge größer als die Mindestdurchflußmenge bei Normalbetrieb des Zählers erfaßt wird, das Verhältnis zwischen der Summe der zwischen der ersten und der zweiten Durchflußmenge berechneten Volumeneinheiten (V1) und dieser besagten Summe zu errechnen, zu der die Summe der bei Durchflußmengen größer als die zweite Durchflußmenge verbuchten Volumeneinheiten (V2) hinzuaddiert wird, Mittel zum Vergleich des besagten Verhältnisses mit einem Verdecktbetriebs-Schwellenwert und Mittel zur Ein- und Abschaltung einer Zeituhr in Abhängigkeit von dem durchgeführten Vergleich.

4. Vorrichtung nach Anspruch 3,
**dadurch gekennzeichnet, daß** die Mittel zur Messung der durch den Wasserzähler fließenden Volumeneinheiten aus einem auf dem Zähler angebrachten Impulsgeber für elektrische Impulse bestehen.

5. Vorrichtung nach einem der Ansprüche 3 und 4,
**dadurch gekennzeichnet, daß** die Berechnungs- und Analysemittel aus einem elektronischen Rechner bestehen.

6. Vorrichtung nach Anspruch 5,
**dadurch gekennzeichnet, daß** der besagte elektronische Rechner ein Display umfaßt, auf dem die Ergebnisse der durchgeführten Messungen angezeigt werden.

7. Vorrichtung nach Anspruch 5,
**dadurch gekennzeichnet, daß** der Rechner mit einer Datei verbunden ist, die eine datentechnische Auswertung der Ergebnisse ermöglicht.